# EUROPEAN PATENT APPLICATION

(11) **EP 1 338 841 A2**
(43) Date of publication of application: **27.08.2003**
(21) Application number: 03075506.0
(22) Date of filing: 21.02.2003
(51) Int. Cl.: F16L 33/24

(54) **Set of fittings for irrigation plants**

(30) Priority: 25.02.2002 IT MI20020092 U
(71) Applicant: CLABER S.P.A., I-33080 Fiume Veneto Pordenone (IT)
(72) Inventor: Roman, Gianfranco, 33087 Pasiano (PN) (IT)
(74) Representative: Mittler, Enrico

(57) **Abstract**

The present invention refers to a set of fittings for irrigation plants, in which each fitting (1, 2, 4) has at least one end coupler (6) onto which a semi rigid tube (9) can be fitted. The above mentioned end coupler (6) has an external screw thread (7) that precedes a ring sealing thread (8) which is behind in relation to the free end of the coupler (6).

## Description

The present invention refers to a set of fittings for irrigation plants, in particular of the drip and micro irrigation type.

On-surface micro irrigation plants are already known that use semi-rigid tubes connected with each other and with vertical water delivery components by means of fittings with end couplers which have external ring ribbing with increasing diameter onto which the ends of the afore mentioned semi-rigid tubes are pressed after being heated.

This type of connection of the tube to the end coupler of the fitting determines permanent deformation of the semi-rigid tube, which tends to slip off, thus making it necessary to use a hose clip.

The object of the present invention is to produce a set of fittings for irrigation plants in general, in particular of the drip and micro irrigation type, subsurface and on-surface, that overcomes the previously mentioned drawback and makes it possible to couple the fitting and the semi-rigid tube permanently without having to use hose clips.

In accordance with the invention this object has been achieved with a set of fittings, which can be of the T or linear type with male or female connection to a vertical component for delivering water, in which each fitting has at least one end coupler with external thread ribbing that precedes a ring sealing thread which is behind in relation to the free end of the coupler.

It has been seen that in this manner the semi-rigid tube can be fitted onto the end coupler with a constant pressure, linear screw-on movement until it engages with the ring sealing thread. The semi-rigid tube therefore is not subject to permanent deformation and can keep its position without slipping off and without needing any hose clips.

The fittings according to the invention presently intended for use in sub-surface micro irrigation plants, can also be used for on-surface micro irrigation plants, and also for drip-by-drip plants and irrigation plants in general.

The characteristics of the present invention will be made even more evident by the following detailed description of embodiments thereof illustrated as example in the enclosed drawings, in which:
Figure 1 shows in an exploded perspective view a group of fittings according to the invention during the assembly phase;
Figure 2 shows a side view of a T fitting according to the invention;
Figure 3 shows a side view of a linear fitting according to the invention, with female connection for a vertical component for delivering water;
Figure 4 shows a side view of a linear fitting according to the invention, fitted with male connection for a vertical component for delivering water;
Figure 5 shows an axial section of the assembly of a semi rigid tube on an end coupler of a fitting according to the previous figures.

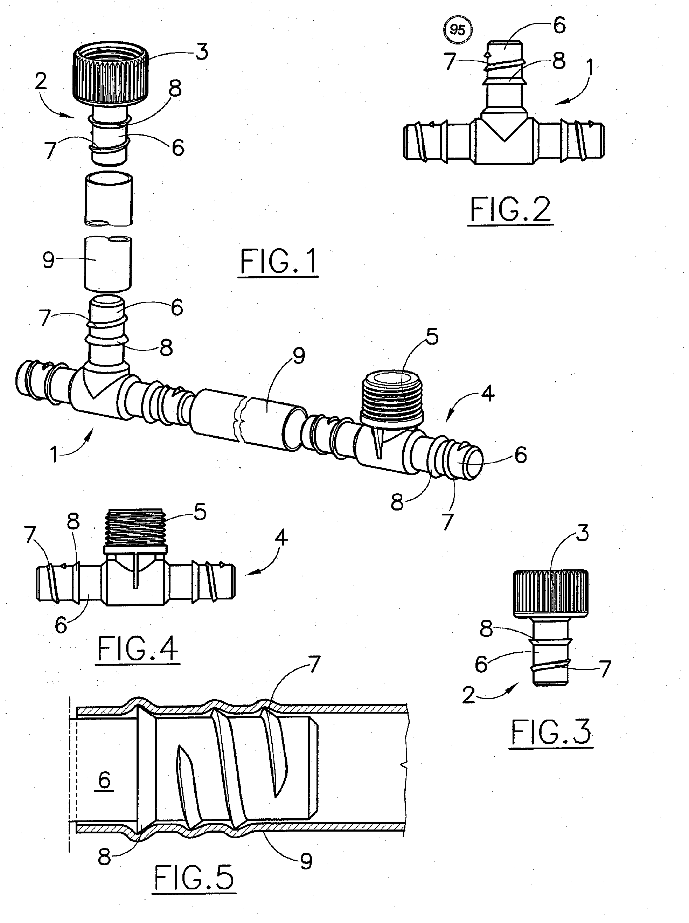

Figures 2, 3 and 4 show respectively a fitting 1 of the T type, a fitting 2 of the type with female threaded connection 3 for vertical component for delivering water and a fitting 4 of the type with male threaded connection 5 for vertical component for delivering water.

All the fittings mentioned above make provision for at least one end coupler 6, which externally has a screw threading 7 and a ring sealing thread 8 of greater diameter further behind.

As shown in Fig. 1, the above mentioned fittings can be engaged onto the ends of semi rigid tubes 9 that can be fitted onto the end couplers 6 by screwing on the respective external screw threads 7.

The semi rigid tubes 9 are screwed on until they reach the ring sealing thread 8, onto which they engage remaining locked in the axial position thus reached (Fig. 5).

## Claims

1. Set of fittings for irrigation plants, in which each fitting (1, 2, 4) has at least one end coupler (6) onto which a semi rigid tube (9) can be fitted, **characterized in that** said end coupler (6) is provided with an external screw thread (7) that precedes a ring sealing thread (8) which is behind in relation to the free end of the coupler (6).

2. Set of fittings according to claim 1, **characterized in that** one of said fittings (1, 2, 4) is a T fitting (1).

3. Set of fittings according to claim 1, **characterized in that** one of said fittings (1, 2, 4) is a fitting (2) with female threaded connection (3) for vertical water delivering component.

4. Set of fittings according to claim 1, **characterized in that** one of said fittings (1, 2, 4) is a fitting (4) with female threaded connection (5) for vertical water delivering component.
